# FASCICULE DE BREVET EUROPEEN

(11) **EP 1 877 470 B1**
(45) Date de publication et mention de la délivrance du brevet: **01.05.2019**
(21) Numéro de dépôt: 06725979.6
(22) Date de dépôt: 22.02.2006
(51) Int. Cl.: C08J 3/22, C08J 3/20, C08L 83/04

(54) **COMPOSITIONS ORGANOPOLYSILOXANES DURCISSANT EN ELASTOMERES DES LA TEMPERATURE AMBIANTE EN PRESENCE D' HUMIDITE**
ORGANOPOLYSILOXANZUSAMMENSETZUNGEN, DIE BEI UMGEBUNGSTEMPERATUR IN GEGENWART VON FEUCHTIGKEIT ZU ELASTOMEREN HÄRTEN
ORGANOPOLYSILOXANE COMPOSITIONS THAT HARDEN INTO ELASTOMERS AT AMBIENT TEMPERATURE IN THE PRESENCE OF MOISTURE

(30) Priorité: 04.03.2005 FR 0502179
(43) Date de publication de la demande: 16.01.2008
(73) Titulaire: ELKEM SILICONES France SAS, 69003 Lyon (FR)
(72) Inventeur: CHAUSSADE, Marc, F-69100 Villeurbanne (FR)
(86) Numéro de dépôt international: PCT/FR2006/000398
(87) Numéro de publication internationale: WO 2006/095069

(56) Documents cités:
- US-A- 4 528 324
- US-A- 5 741 839
- US-B1- 6 303 678

## Description

Le domaine de l'invention est celui des mastics silicones monocomposants, stables au stockage en absence d'humidité, réticulant par des réactions de polycondensation catalysées à l'aide d'un catalyseur en élastomères adhérents sur divers supports en s'accompagnant d'un dégagement d'alcool et s'effectuant à température ambiante (par exemple 5 à 35°C) et en présence d'eau (par exemple humidité ambiante). Ces mastics sont communément appelés « mastics silicone alcoxy monocomposants ».

De tels mastics à base d'élastomères silicones, sont utilisés dans de nombreuses applications, notamment dans le bâtiment, en tant que moyen d'étanchéification, de jointoiement, de revêtement et/ou d'assemblage entre autres. Les propriétés rhéologiques de ces mastics silicones monocomposants (forme pâteuse) font l'objet de beaucoup d'attention dans ces applications. Il en va de même en ce qui concerne leur résistance aux intempéries et à la chaleur, leur flexibilité à basse température, leur facilité de mise en oeuvre et leur réticulation/durcissement rapide in situ, au contact de l'humidité de l'air.

Il est connu de préparer des compositions ayant ces propriétés par mélange principalement de polymère(s) diorganopolysiloxane(s) à groupements terminaux alcoxyles, de charge(s) minérale(s), de silanes substitués par des groupes hydrolysables particuliers, d'agent(s) améliorant l'adhérence et d'un catalyseur de durcissement (ou de réticulation).

Les réactions de polycondensation mentionnées ci-dessus sont celles où des liaisons Si-OR réagissent entre elles (le substituant R étant un reste alkyle) en présence d'eau tout en dégageant un alcool ROH.

Des compositions de ce type figurent plus spécialement dans les brevets US-A-5.674.936 et US-A-5.698.653. Les compositions conformes à cet art antérieur sont formées par mélange d'un polymère diorganopolysiloxane à groupements terminaux alcoxyles, d'une charge minérale siliceuse, d'un polymère diorganopolysiloxane non réactif à groupements terminaux trialkylsiloxyles, d'un catalyseur de durcissement à base d'un titanate de tétraalkyle et d'un agent améliorant l'adhérence consistant dans un isocyanurate de tris-1,3,5-(trialkoxysilyl)alkyle (dans le cas de US-A-5.674.936) ou dans un silane époxydé (dans le cas de US-A-5.698.653).

Cependant une difficulté à laquelle se trouve confronté l'homme du métier est la stabilité au stockage, en particulier en cartouche, d'un mastic de type alcoxy avant son utilisation. La stabilité est d'autant plus dégradée que la température du milieu de stockage est importante. Ceci se traduit également lorsqu'ils sont utilisés après un long stockage (de 3 à 12 mois) par une dégradation des propriétés d'application du mastic. Parmi les propriétés importantes requises pour une bonne applicabilité du mastic silicone alcoxy monocomposant, on peut citer l'extrudabilité, la vitesse de prise (réticulation sur au moins 2 mm en 24 heures), et les propriétés de résistance mécanique telles que la résistance à la rupture et le module à 100 % d'allongement. Il est entendu que ces problèmes de stabilité au stockage en cartouche entraînent aussi des difficultés majeures quant à la logistique nécessaire à la livraison de ce type de produit notamment dans les pays chauds.

Pour palier aux problèmes de stabilité au stockage, le brevet US 5,741,839 propose d'ajouter au mastic un stabilisant qui est une carbodiimide tout en montrant qu'un mastic préparé sans cet additif ne peut plus réticuler après un stockage de 24 heures à 100°C.

Compte tenu de cet arrière plan technologique, l'un des objectifs essentiels de la présente invention est d'obtenir un mastic silicone alcoxy monocomposant ayant une bonne applicabilité tout au long de son cycle de vie, de la fabrication à l'utilisation, ceci même après un long stockage à l'abri de l'humidité de l'air avant utilisation (stockage de 3 à 12 mois).

Un autre objectif de l'invention est d'obtenir un mastic silicone alcoxy monocomposant présentant une bonne extrudabilité, une vitesse de prise rapide (réticulation sur au moins 2 mm en 24 heures) et des bonnes propriétés de résistance mécanique telles que la résistance à la rupture et le module à 100 % d'allongement, ceci même après un long stockage à l'abri de l'humidité de l'air avant utilisation (stockage de 3 à 12 mois).

Un autre objet de l'invention est de maintenir les autres propriétés tout en maintenant lors de son utilisation ses propriétés d'usages de l'élastomère obtenu après réticulation du mastic silicone alcoxy monocomposant en présence d'humidité.

Ces objectifs, parmi d'autres, sont atteints par la présente invention qui concerne en premier lieu l'utilisation d'un mélange maître **M** pour obtenir un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, caractérisée en ce que ledit mélange maître **M** et ledit mastic silicone alcoxy monocomposant sont préparés suivant les étapes suivantes :
a) la préparation dans un réacteur sous agitation du mélange maître **M** stable au stockage et transportable ne contenant pas de catalyseur de durcissement **H** conformément aux étapes a-1) et a-2) suivantes :
   a-1) préparation d'une composition silicone comprenant :
      - au moins un organopolysiloxane **A** à groupements alcoxylés terminaux et/ou pendants obtenu insitu par fonctionnalisation :
         - d'au moins un organopolysiloxane réactif **I** comprenant au moins deux groupements hydroxyles ;
         - en présence d'une quantité catalytiquement efficace d'un catalyseur de fonctionnalisation **J** qui est choisi parmi le groupe constitué par :
            - la lithine de formule LiOH ou LiOH, H2O,
            - la soude, et
            - la potasse et
         - d'au moins un réticulant silane **C2** à fonctions alcoxylées.
      - au moins une charge minérale **B** de préférence à base de silice amorphe, en particulier à base de silice amorphe de pyrogénation, éventuellement au moins une autre charge telle que la silice cristalline, le carbonate de calcium ou une charge à structure lamellaire telle que le mica ;
      - éventuellement au moins un réticulant silane **C1** à fonctions alcoxylées;
      - éventuellement au moins un diorganopolysiloxane linéaire non réactif **D** de formule (I): 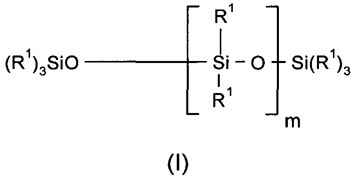 dans laquelle :
         - les substituants R¹, identiques ou différents, représentent chacun un radical monovalent hydrocarboné saturé ou non en C1 à C13, substitué ou non substitué, aliphatique, cyclanique ou aromatique ; et
         - m a une valeur suffisante pour conférer au polymère de formule (I) une viscosité dynamique à 25°C allant de 10 à 200.000 mPa.s ; et
         - éventuellement au moins un agent auxiliaire **F** connu de l'homme de métier qui est choisi généralement, quand on en a besoin, en fonction des applications dans lesquelles les compositions selon la présente invention sont utilisées; ledit agent auxiliaire **F** étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7;** et
   a-2) ladite composition silicone résultant de l'étape a-1) est maintenue sous agitation et est soumise à une opération de dévolatilisation afin d'obtenir ledit mélange maître **M;**
b) la préparation du mastic silicone alcoxy monocomposant :
   on ajoute audit mélange maître **M** sous agitation, après un stockage dudit mélange maître **M** :
   - une quantité efficace d'un catalyseur de durcissement **G** seul ou sous la forme d'une préparation comprenant ledit catalyseur de durcissement **G,**
   - éventuellement au moins un agent auxiliaire **F** connu de l'homme de métier qui est choisi généralement, quand on en a besoin, en fonction des applications dans lesquelles les compositions selon la présente invention; ledit agent auxiliaire **F** étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7,**
   - éventuellement un complément de ladite charge minérale **B,** et
   - éventuellement d'au moins un pigment coloré **H** seul ou sous la forme d'une préparation comprenant ledit pigment coloré **H** ; et
   - éventuellement on effectue une étape de finition au cours de laquelle le mastic silicone alcoxy monocomposant est maintenu sous agitation et est soumis à une opération de dévolatilisation effectuée de préférence sous une pression inférieure à la pression atmosphérique.

Pour atteindre cet objectif, la Demanderesse a eu le mérite de mettre en évidence, de manière tout à fait surprenante et inattendue, que lors de la préparation d'un mastic silicone alcoxy monocomposant, la préparation d'un mélange maître **M** selon l'invention dans une étape distincte, comprenant une opération de dévolatilisation, et préalable à l'étape d'ajout d'un catalyseur de durcissement permettait d'obtenir un mastic silicone alcoxy monocomposant dont l'aptitude au stockage, par exemple en cartouche, est améliorée et ceci sans ajouter de stabilisant tel que par exemple une carbodiimide ou des complexes de titanium.

En outre, le mastic silicone alcoxy monocomposant ainsi obtenu est économique et conduit à des élastomères réticulés doués de propriétés mécaniques avantageuses et adhérents sur de nombreux supports.

Un autre avantage lié à la préparation préalable d'un mélange maître **M** stable au stockage et transportable selon l'invention apparaît lors du procédé de fabrication d'un mastic silicone alcoxy monocomposant. En effet, la stabilité du mélange maître **M** est nettement améliorée du fait de l'absence d'un catalyseur de durcissement. Ce mélange maître **M** est une dispersion d'huile(s) silicone(s) stable au stockage et transportable comprenant les charges dont la silice amorphe de pyrogénation et une partie des constituants nécessaires à la fabrication d'un mastic silicone alcoxy monocomposant. Ce mélange maître, facilement transportable car stable au stockage, peut être utilisé sur un autre site de production, permettant ainsi une souplesse dans le procédé de fabrication d'un mastic silicone alcoxy monocomposant.

Les silices amorphes de pyrogénation sont des composants importants des mastics silicones alcoxy monocomposants au même titre que les huiles polyorganosiloxanes. Les silices de pyrogénation comme les huiles polyorganosiloxanes sont fabriquées à partir de matières premières communes (chlorosilanes). Ces chlorosilanes sont difficiles à transporter. Il est donc avantageux de produire les huiles polyorganosiloxanes et les silices de pyrogénation sur des sites industriels proches.

De plus, l'introduction des charges dans la préparation d'un mastic silicone alcoxy monocomposant est essentielle et a pour but de conférer de bonnes caractéristiques mécaniques et rhéologiques aux élastomères après durcissement. Il est connu que la manipulation de ces charges, par exemple la silice, sur un site de production est extrêmement délicate. La silice est une poudre ayant une densité apparente faible (de l'ordre de 30 à 50 g/l) ce qui génère une complexité supplémentaire lors de son introduction dans une composition silicone. Cette étape délicate peut, grâce à la stabilité du nouveau mélange maître selon l'invention, se faire sur un site de production de charges telles que la silice et ainsi éviter le transport délicat de charges à faible densité de matière vers un site de production d'un mastic silicone alcoxy monocomposant.

Cette nouvelle possibilité offerte par l'invention permet d'envisager des unités de production dédiées à la fabrication du mélange maître **M** proches des fabricants de charges telles que la silice et des unités de production de mastics silicone alcoxy monocomposants proches de l'utilisateur final. Dans le procédé classique, cela est difficile, car toutes les étapes du procédé, fabrication jusqu'au conditionnement du mastic silicone alcoxy monocomposant, sont effectuées sur un seul site de production.

Un autre objet de l'invention concerne un procédé de préparation d'un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, caractérisée en ce que ledit mastic silicone alcoxy monocomposant est préparé suivant les étapes suivantes :
a) la préparation dans un réacteur sous agitation d'un mélange maître **M** stable au stockage et transportable ne contenant pas de catalyseur de durcissement **H** conformément aux étapes a-1) et a-2) suivantes :
   a-1) préparation d'une composition silicone comprenant :
      - au moins un organopolysiloxane **A** à groupements alcoxylés terminaux et/ou pendants, obtenu insitu par fonctionnalisation :
         - d'au moins un organopolysiloxane réactif I comprenant au moins deux groupements hydroxyles ;
         - en présence d'une quantité catalytiquement efficace d'un catalyseur de fonctionnalisation J qui est choisi parmi le groupe constitué par :
            - la lithine de formule LiOH ou LiOH, H2O,
            - la soude, et
            - la potasse et
         - d'au moins un réticulant silane **C2** à fonctions alcoxylées,
      - au moins une charge minérale **B** de préférence à base de silice amorphe, en particulier à base de silice amorphe de pyrogénation, éventuellement au moins une autre charge telle que la silice cristalline, le carbonate de calcium ou une charge à structure lamellaire telle que le mica ;
      - éventuellement au moins un réticulant silane **C1** à fonctions alcoxylées;
      - éventuellement au moins un diorganopolysiloxane linéaire non réactif **D** de formule (I): 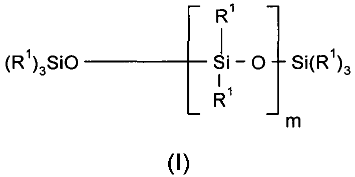 dans laquelle :
         - les substituants R¹, identiques ou différents, représentent chacun un radical monovalent hydrocarboné saturé ou non en C1 à C13, substitué ou non substitué, aliphatique, cyclanique ou aromatique ; et
         - m a une valeur suffisante pour conférer au polymère de formule (I) une viscosité dynamique à 25°C allant de 10 à 200.000 mPa.s ; et
      - éventuellement au moins un agent auxiliaire **F** connu de l'homme de métier qui est choisi généralement, quand on en a besoin, en fonction des applications dans lesquelles les compositions selon la présente invention sont utilisées; ledit agent auxiliaire **F** étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7;** et
   a-2) ladite composition silicone résultant de l'étape a-1) est maintenue sous agitation et est soumise à une opération de dévolatilisation afin d'obtenir ledit mélange maître **M;**
b) l'addition au dit mélange maître **M** et sous agitation, après un stockage dudit mélange maître **M** :
   - d'une quantité efficace d'un catalyseur de durcissement **G** seul ou sous la forme d'une préparation comprenant ledit catalyseur de durcissement **G,**
   - éventuellement d'au moins un agent auxiliaire **F** connu de l'homme de métier qui est choisi généralement, quand on en a besoin, en fonction des applications dans lesquelles les compositions selon la présente invention; ledit agent auxiliaire **F** étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7,**
   - éventuellement d'un complément de ladite charge minérale **B,** et
   - éventuellement d'au moins un pigment coloré **H** seul ou sous la forme d'une préparation comprenant ledit pigment coloré **H** ; et
c) éventuellement une étape de finition au cours de laquelle le mélange obtenu à l'issu de l'étape précédente est maintenu sous agitation et est soumis à une opération de dévolatilisation effectuée de préférence sous une pression inférieure à la pression atmosphérique.

Selon un mode préférentiel, lorsque ledit mélange maître **M** est transporté, ce transport est effectué au moyen de conteneurs souples contenant un dispositif de vidange comprenant au moins un organe presseur tel qu'un piston, un jeu de rouleaux et/ou un fluide presseur. Ces conteneurs souples (« big bag ») sont, par exemple, des sacs en toile (e.g. polypropylène) doublés d'un sac fin, par exemple multicouches (polyéthylène/aluminium/polyéthylène téréphtalate) collés et/ou cousus à la toile qui contiennent un dispositif de vidange comprenant au moins un organe presseur qui peut-être un piston un jeu de rouleaux ou un fluide presseur. Ces sacs sont décrits dans la demande de brevet WO-A-2004-07464. Ce type d'emballage autonome peut être transporté aisément, par exemple en étant simplement posé sur une palette et attaché, ou bien encore inclus dans d'autres contenants qui n'interviennent pas dans le procédé de vidange, contrairement aux sacs fins en polyéthylène, qui, de manière connue, sont logés dans des conteneurs rigides servant à la fois pour le transport et la vidange. Ces conteneurs souples ou "big bag" peuvent avoir de grandes capacités, par exemple comprises entre 500 et 2000 litres.

Concernant l'organopolysiloxane **A** à groupements alcoxylés terminaux et/ou pendants, il est préparé selon des techniques connues de l'homme du métier, voir par exemple les brevets US 3.175.993, 4.772.675, 4.871.827, 4.888.380, 4.898.910 et 4.906.719 qui enseignent la préparation de polyorganosiloxanes terminés par des fonctions éthylène alcoxysilylées.

Selon un autre mode de réalisation préféré, l'organopolysiloxane **A** à groupements alcoxylés terminaux et/ou pendants est préparé in situ par fonctionnalisation :
- d'au moins un polyorganosiloxane réactif **I** comprenant au moins deux groupements hydroxyles constitués par des motifs siloxyles de formule **(II)**:

   (R³)ₓ(R**'³)_{y}(**OH)_{z}SiO_{(4-x-y-z)/2}

   formules dans laquelle
   - z=0 ou 1 ;
   - x et y = 0, 1, 2 ou 3 ;
   - x+y+z ≤3.
   - les substituants R³ et R'³, identiques ou différents, représentent chacun un radical monovalent hydrocarboné saturé ou non en C1 à C13, substitué ou non substitué, aliphatique, cyclanique ou aromatique ; et
   - le nombre de motifs de formule (II) est choisi de manière à conférer au polyorganosiloxane de formule **(II)** une viscosité dynamique à 25°C allant de 50 à 1.000.000 mPa.s ;
      - en présence d'une quantité catalytiquement efficace d'un catalyseur de fonctionnalisation **J** qui est choisi parmi le groupe constitué par :
         - la lithine de formule LiOH ou LiOH, H2O,
         - la soude, et
         - la potasse.; et
- d'au moins un réticulant silane **C2** à fonctions alcoxylées.

Il doit être compris que, dans le cadre de la présente invention, on peut utiliser comme polyorganosiloxane réactif **I** comprenant au moins deux groupements hydroxyles, un mélange constitué de plusieurs polyorganosiloxanes hydroxylés qui diffèrent entre eux par la valeur de la viscosité et/ou la nature des substituants liés aux atomes de silicium. Il doit être indiqué de plus que les polyorganosiloxanes hydroxylés de formule **(II)** peuvent éventuellement comprendre des motifs T de formule R³SiO_{3/2} et/ou des motifs Q de formule SiO_{4/2}.

On met en oeuvre des polymères hydroxylés diorganopolysiloxanes linéaires réactifs **I** ayant une viscosité dynamique à 25°C allant de 50 à 1.000.000 mPa.s et, de préférence, allant de 50 à 200.000 mPa.s.

Les substituants R¹, R³ et R'³ mentionnés ci-avant pour les diorganopolysiloxanes linéaires non réactifs D et les polyorganosiloxane réactifs **I** comprenant au moins deux groupements hydroxyles comprennent :
- les radicaux alkyles et halogénoalkyles ayant de 1 à 13 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 8 atomes de carbone tels que les radicaux vinyle, allyle, butène-2 yle,
- les radicaux aryles et halogénoaryles mononucléaires ayant de 6 à 13 atomes de carbone tels que les radicaux phényle, tolyle, xylyle, chlorophényle, dichlorophényle, trichlorophényle, et
- les radicaux cyanoalkyles dont les chaînons alkyles ont de 2 à 3 atomes de carbone tels que les radicaux β-cyanoéthyle et γ-cyanopropyle.

S'agissant des diorganopolysiloxanes linéaires non réactifs D, ils présentent une viscosité dynamique à 25°C allant de 10 à 200.000 mPa.s et, de préférence allant de 50 à 150.000 mPa.s.

Selon une disposition plus préférée de réalisation de l'invention, à l'étape a-1) du procédé selon l'invention, les proportions sur la base de 100 parties en poids de polyorganosiloxane réactif **I** comprenant au moins deux groupements hydroxyles sont les suivantes :
- de 2 à 25 parties de réticulant(s) silane(s) **C2,**
- une quantité catalytiquement efficace de catalyseur de fonctionnalisation J qui est choisi parmi le groupe constitué par :
   - la lithine de formule LiOH ou LiOH, H2O,
   - la soude, et
   - la potasse,
- de 0 à 50 parties de diorganopolysiloxane(s) linéaire(s) non réactif(s) **D,**
- de 2 à 150 parties de charge(s) minérale(s) **B,** et
- de 0 à 50 parties d'agent(s) auxiliaire(s) F.

Lorsqu'il est envisagé d'utiliser plusieurs polyorganosiloxane réactif **I,** il est avantageux d'utiliser un polyorganosiloxane réactif **I** comprenant au moins deux groupements hydroxyles associé à une résine organopolysiloxanes hydroxylées **E.**

Les résines plus particulièrement sélectionnées sont celles du type T(OH), DT(OH), DQ(OH), DT(OH), MQ(OH), MDT(OH) MDQ(OH) ou les mélanges de celles-ci. Dans ces résines, chaque groupement OH est porté par un atome de silicium appartenant à un motif D, T ou Q.

Dans la terminologie de la chimie des silicones, on définit les motifs siloxaniques M, D, T, Q comme suit :

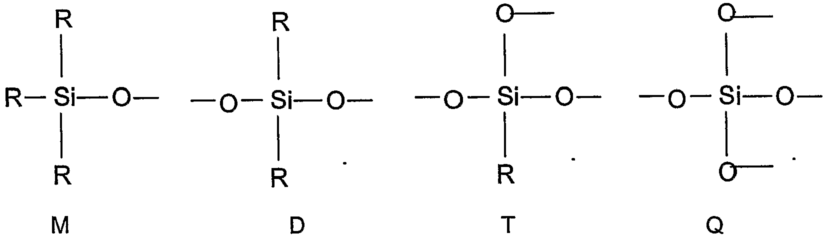

Ces résines sont des produits de condensation (mono ou polycondensation-hétéro ou homo condensation) de monomères, d'oligomères ou de polymères POS porteurs de groupements condensables, de préférence de nature hydroxylique.

Comme exemple de résine organopolysiloxanes hydroxylées **E,** on peut citer les résines organopolysiloxane à motif TD ou MDT hydroxylées comprenant au moins 20 % en poids de motifs T et ayant une teneur pondérale en groupement hydroxyle allant de 0,3 à 5 %. De manière encore plus préférentielle, on utilise des résines de ce type, dans la structure desquelles au moins 80 % en nombre des substituants R¹ sont des radicaux méthyle. Les groupements hydroxyles des résines organopolysiloxanes hydroxylées **E** peuvent être portés par les motifs M, D et/ou T.

Selon un mode préféré, les silanes réticulants **C1** et/ou **C2,** identiques ou différents, sont des polyalkoxysilanes de formule **(III)** :

(R⁴)ₐSi(OR⁵)₄₋ₐ **(III)**

formule dans laquelle :
- le substituant R⁴ représente un radical monovalent hydrocarboné saturé ou non en C₁ à C₁₃, substitué ou non substitué, aliphatique, cyclanique ou aromatique ;
- les symboles R⁵, identiques ou différents, représentent chacun un radical alkyle, linéaire ou ramifié, en C₁ à C₈ ; et
- a est zéro, 1 ou 2.

Parmi les réticulant(s) silane(s) **C1** et **C2** qui sont utilisés dans le cadre de la présente invention, on peut notamment citer ceux ci-après listés :

Si(OCH₃)₄

Si(OCH₂CH₃)4

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂)

(CH₃O)₃Si[CH₂-(CH₃)C=CH₂]

(C₂H₅O)₃Si(OCH₃),

et

C₆H₅Si(OCH₃)₃.

Les réticulant(s) silane(s) **C** utilisés de préférence sont : Si(OC₂H₅)₄, CH₃Si(OCH₃)₃, CH₃Si(OC₂H₅)3, (C₂H₅O)₃Si(OCH₃), (CH₂=CH)Si(OCH₃)₃, (CH₂=CH)Si(OC₂H₅)₃.

Le(s) réticulant(s) **C1** et **C2** peuvent également se présenter sous une forme oligomérique comportant 1 à 10 atome(s) de silicium.

On recommande, dans le cadre de la présente invention, d'utiliser comme catalyseur J la lithine, de formule LiOH ou LiOH, H2O qui peut être utilisée en solution dans au moins un alcool aliphatique E ayant de 1 à 3 atomes de carbone, tel que par exemple le méthanol, l'éthanol, l'isopropanol ou un mélange de ces alcools.

Par quantité catalytiquement efficace de catalyseur de fonctionnalisation J, on entend une quantité telle que la vitesse de réaction de fonctionnalisation soit la plus élevée possible, notamment en utilisant Si(OC₂H₅)₄, CH₃Si(OCH₃)₃, CH₃Si(OC₂H₅)3, (C₂H₅O)₃Si(OCH₃), (CH₂=CH)Si(OCH₃)₃, (CH₂=CH)Si(OC₂H₅)₃ comme agent de fonctionnalisation. Dans la plupart des cas, on utilise de 0,001 à 5 moles de catalyseur pour 1 mole de groupements silanols (=Si-OH) apportés par le (ou les) polyorganosiloxane(s) réactif(s) **I** hydroxylé(s) et éventuellement par la (ou les) résine(s) organopolysiloxane(s) hydroxylée(s) **E.** Dans le cas préféré faisant appel à la lithine, on utilise de 0,005 à 0,5 moles de LiOH pour 1 mole de groupements silanols.

La charge **B** prévue est minérale et peut être constituée par des produits choisis parmi les matières siliceuses ou non siliceuses.

S'agissant des matières siliceuses, elles peuvent jouer le rôle de charge renforçante ou semi-renforçante.

Les charges siliceuses renforçantes sont choisies parmi les silices colloïdales, les poudres de silice de pyrogénation (ou de combustion) et de précipitation ou leur mélange.

Ces poudres présentent une taille moyenne de particule généralement inférieure à 1 µm et une surface spécifique BET supérieure à 50 m²/g, de préférence comprise entre 100 et 350 m²/g.

Les charges siliceuses semi-renforçantes telles que des silices amorphes, des terres de diatomées ou du quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 µm et une surface BET inférieure à 100 m²/g.

De façon pratique mais non limitative, la charge employée est de la poudre de silice de pyrogénation.

Ces charges peuvent être modifiées en surface par traitement avec les divers composés organiques ou organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets FR 1 126 884, FR 1 136 885, FR 1 236 505, GB 1 024 234). Les charges traitées renferment, dans la plupart des cas, de 3 à 30 % de leur poids de composés organosiliciques.

L'introduction des charges a pour but de conférer de bonnes caractéristiques mécaniques et rhéologiques aux élastomères découlant du durcissement des compositions conformes à l'invention. On peut introduire une seule espèce de charges ou des mélanges de plusieurs espèces.

Comme exemples de catalyseur de durcissement **H** on peut citer les monocarboxylates et les dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 - 2ème édition).

Les chelates d'étain de valence IV hexacoordinés tels que ceux décrits dans la demande de brevet européen EP-A-147 323 et le brevet US-A-4 517 337 cités comme référence sont particulièrement appropriés.

Sont également préférés, les catalyseurs de durcissement qui sont un mélange d'un bis(*β*-dicétonate) de diorganoétain avec un dérivé organique de l'étain, également de valence IV, mais exempt de fonction *β*-dicétonato, et possédant au moins un atome d'étain, chaque atome d'étain portant deux radicaux organiques liés par une liaison Sn-C, les deux autres valences étant satisfaites au moyen de radicaux choisi parmi les radicaux organiques ou inorganiques liés par une liaison SnO, SnS, par des atomes d'halogènes, par des groupes hydroxy et par des atomes d'oxygène.

Comme autres exemples de catalyseur de durcissement **H,** on peut aussi citer les dérivés organiques du titane qui sont décrits dans la demande FR-A-2786497 tels que :
- le titanate d'éthyle, le titanate de propyle, le titanate d'isopropyle, le titanate de butyle, le titanate d'éthyl-2 hexyle, le titanate d'octyle, le titanate de décyle, le titanate de dodécyle, le titanate de β-méthoxyéthyte, le titanate de β-éthoxyéthyle, le titanate de β-propoxyéthyte, le titanate de formule Ti[(OCH₂CH₂)₂OCH₃]₄.

On peut aussi utiliser les catalyseurs de durcissement décrits dans les demandes FR-A-2856694, FR-A-2856695 et FR 0315286.

Comme agent(s) auxiliaire(s) **F** tel(s) que notamment, pour 100 parties en poids de polymère(s) diorganopolysiloxane(s) linéaire(s) A :
- éventuellement de 0,1 à 10 parties d'un agent d'adhérence **F1,**
- éventuellement une quantité efficace d'au moins un composé pris dans le groupe formé par: des antifongiques **F2** ; des bactéricides **F3,** des diluants inertes organiques **F4** (tels que notamment : les coupes pétrolières de haut point d'ébullition, le toluène, le xylène, l'heptane, le "White-Spirit" le trichloroéthylène, le tétrachloroéthylène) ; des plastifiants **F5** appartenant par exemple au groupe des alkylbenzènes de poids moléculaire supérieur à 200 g/mole comprenant un reste alkyle ramifié ou non ayant de 10 à 30 atomes de carbone ; des agents thixotropants **F6** ; des agents de stabilisation **F7** (tels que notamment : un sel d'acide organique de fer ou de cérium, par exemple l'octoate de fer ou de cérium ; un oxyde de cérium, un hydroxyde de cérium, un oxyde de fer, l'oxyde CaO et l'oxyde MgO).

Comme exemple d'agent d'adhérence **F1** on peut citer les composés organosiliciques portant à la fois (1) des groupes hydrolysables liés à l'atome de silicium et (2) des groupes organiques substitués par des radicaux choisis dans le groupe des radicaux isocyanato, époxy, alkényle, isocyanurate, (meth)acrylate et aminoalkyle.

A titre illustratif d'agents d'adhérence **F1,** peuvent être cités les composés organosiliciques ci-après définis : 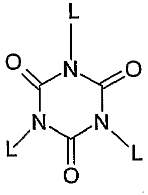 où L = -(CH₂)₃-Si(OCH₃)₃ (décrit dans le brevet US-A-3.517.001
- le 3-glycidoxypropyl-triméthoxysilane (GLYMO)
- le vinyltriméthoxysilane (VTMS),
- le méthacryloxypropyltriméthoxysilane (MEMO),
- 3-aminopropyltriméthoxysilane,
- 3-aminopropyltriéthoxysilane,
- [3-(2-aminoéthyl)aminopropyl]triméthoxysilane,
- [3-(2-aminoéthyl)aminopropyl]méthyldiméthoxysilane,
- leurs mélanges ainsi que sous une forme oligomérisée (résultant de réaction de condensation) à d'autres composés organosiliciques.

Un mastic silicones monocomposant de type alcoxy conforme à l'invention durcit à température ambiante et notamment à des températures comprises entre 5 et 35°C en présence d'humidité. Le durcissement (ou la réticulation) s'effectue de l'extérieur à l'intérieur de la masse des compositions. Il se forme d'abord une peau en surface puis la réticulation se poursuit dans la masse.

Ces mastics peuvent être employées pour de multiples applications comme le jointoiement dans l'industrie du bâtiment, l'assemblage et le collage de matériaux les plus divers (métaux ; matières plastiques comme par exemple le PVC, le PMMA ; les caoutchoucs naturels et synthétiques ; bois ; carton ; faïence ; brique ; verre ; pierre ; béton ; éléments de maçonnerie), et ceci aussi bien dans le cadre de l'industrie du bâtiment que dans celui des industries de l'automobile, de l'électroménager et de l'électronique.

Les exemples suivants illustrent l'invention, sans en limiter sa portée.

### Exemple 1 : Comparatif

Dans un outil continu à bras de mélange corotatifs, on fait réagir :
- 425 parties d'huile polydiméthylsiloxane α,ω-dihydroxylée (huile « hydroxylée ») de viscosité environ 135000 mPa.s,
- 164 parties d'huile polydiméthylsiloxane α,ω-triméthylsilylée (huile « bloquée ») 1000 mPa.s ;
- 22 parties de réticulant type vinyltriméthoxysilane ;
- 3 parties d'une solution de lithine hydratée (LiOH,H₂O catalyseur de fonctionnalisation)) à 3,85 % dans le méthanol ;
on introduit ensuite successivement :
- 44 parties de silice de pyrogénation développant une surface spécifique de 150 m²/g
- 525 parties de carbonate de calcium
- 10 parties d'une préparation catalytique (catalyseur de durcissement) comportant 60 % de silane aminé commercialisé sous le nom Dynasilan-DS1411® par Degussa, 35 % d'un polyéther servant d'additif de rhéologie et 5 % d'un mélange mole à mole entre le dilaurate de dibutylétain et l'acétylacétonate de dibutylétain ; et
- 25 parties de base colorante blanche à base d'oxyde de titane.

En fin de procédé un vide est appliqué pour évacuer le méthanol présent dans le produit fini et le mastic formé est conditionné dans des cartouches étanches, à l'abri de l'air.

### Exemple 2 : Préparation d'un mélange maître selon l'invention

Dans un outil continu à bras de mélange corotatifs, on fait réagir:
- 425 parties d'huile polydiméthylsiloxane α,ω-dihydroxylée (huile « hydroxylée ») de viscosité environ 135000 mPa.s,
- 164 parties d'huile polydiméthylsiloxane α,ω-triméthylsilylée (huile « bloquée ») 1000 mPa.s ;
- 22 parties de réticulant type vinyltriméthoxysilane ;
- 3 parties d'une solution de lithine hydratée (LiOH,H₂O) à 3,85 % dans le méthanol ;
on introduit ensuite successivement :
- 44 parties de silice de pyrogénation développant une surface spécifique de 150 m²/g
- 525 parties de carbonate de calcium

En fin de procédé un vide est appliqué pour évacuer le méthanol présent dans le produit fini. On obtient ainsi un mélange maître conditionné dans des pots fermés sans être parfaitement étanches.

Ce mélange maître est :
- soit utilisé dans les jours qui suivent sa fabrication (exemple 3)
- soit placé 3 semaines à 50°C pour simuler un vieillissement d'environ 6 à 8 mois à température ambiante et utilisé à la suite de ce conditionnement (exemple 4)
- soit placé 6 semaines à 50°C pour simuler un vieillissement de plus d'un an à température ambiante et utilisé à la suite de ce conditionnement (exemple 5)

### Exemple 3 : Invention

On place 1183 parties du mélange maître de l'exemple 2 dans la cuve d'un mélangeur à agitation centrale de type papillon et à râclant contrarotatif. A ce mélange maître sont ajoutés sous air 10 parties de la préparation catalytique et 25 parties de base colorante de l'Exemple 1. On mélange le milieu sous un vide partiel de 200 mbar jusqu'à l'obtention d'un produit homogène (environ 5 min).

Le mastic formé est conditionné dans des cartouches étanches, à l'abri de l'air.

### Exemple 4 : Invention

Une fraction du mélange maître de l'exemple 2 est conditionnée 3 semaines à 50°C.

A l'issu des 3 semaines, après retour à température ambiante, on place 1183 parties de ce produit dans la cuve d'un mélangeur à agitation centrale de type papillon et à râclant contrarotatif.

A ce mélange maître sont ajoutés sous air 10 parties de mélange catalytique et 25 parties de base colorante

On mélange le milieu sous un vide partiel de 200 mbar jusqu'à l'obtention d'un produit homogène (environ 5 min).

Le mastic formé est conditionné dans des cartouches étanches, à l'abri de l'air.

### Exemple 5 : Comparatif

On reprend le procédé de l'exemple 1 mais on n'introduit pas la base colorante. Le mastic formé est conditionné quelques jours en cartouche étanche, à l'abri de l'air puis 1193 parties de ce mastic non coloré sont placées dans la cuve d'un mélangeur à agitation centrale de type papillon et à râclant contrarotatif.

A ce mélange sont ajoutés à l'abri de l'air 25 parties de base colorante.

On mélange le milieu sous un vide partiel de 200 mbar jusqu'à l'obtention d'un produit homogène (environ 5 min).

Le mastic formé est conditionné dans des cartouches étanches, à l'abri de l'air.

### Résultats

Dans le Tableau I ci-dessous on compare les propriétés des différents produits à l'initial et après un vieillissement accéléré de 3 semaines à 50°C permettant de reproduire l'état du mastic après au moins 6 à 8 mois de stockage à température ambiante.

**Tableau I : Résultats**

| | Exemple 1 | Exemple 5 | Exemple 3 | Exemple 4 | Exemple 2 |
|---|---|---|---|---|---|
| **Propriétés à l'initiale** | | | | | |
| Extrudabilité, g/min | 33 | 39 | 50 | 42 | 29 |
| Dureté 24h, ShoreA | 8 | 9 | 10 | 10 | - |
| Dureté 7j, ShoreA | 17 | 16 | 19 | 20 | - |
| R/R, MPa | 1 | 1,1 | 1 | 1 | - |
| A/R, % | 570 | 670 | 570 | 590 | - |
| Mod100%, MPa | 0,4 | 0,4 | 0,4 | 0,4 | - |

| **Propriétés après vieillissement 3semaines à 50°C** | | | | | |
|---|---|---|---|---|---|
| Extrudabilité, g/min | 30 | 37 | 37 | 32 | 43 |
| Réticulation sur 2 mm après 24h | non | non | oui | oui | |
| Dureté 24h, ShoreA | NR | NR | 9 | 9 | |
| Dureté 7j, ShoreA | 14 | 13 | 17 | 17 | |
| R/R, MPa | 0,8 | 0,8 | 1 | 1 | |
| A/R, % | 620 | 700 | 600 | 560 | |
| Mod100%, MPa | 0,3 | 0,3 | 0,4 | 0,4 | |

| | | | | | |
|---|---|---|---|---|---|
| NR= non réticulé Où: - l'extrudabilité est donnée par la masse de mastic extrudée à 23°C en 1 min à travers un orifice de 3 mm sous une pression de 3 bar ; - la dureté 24h est la dureté (en ShoreA) d'un empilement de 3 éprouvettes de 2 mm d'épaisseur après 24 heures de réticulation du film. Les mesures sont effectuées sur la face de la composition ayant réticulé en contact avec l'air. La mesure est effectuée en superposant 3 épaisseurs de films de 2 mm. Les mesures sont effectuées selon les indications de la norme ASTM-D-2240. - la dureté 7j est la dureté (en ShoreA) d'un empilement de 3 éprouvettes de 2 mm d'épaisseur après 7 jours de réticulation du film. Les mesures sont effectuées sur la face de la composition ayant réticulé en contact avec l'air. La mesure est effectuée en superposant 3 épaisseurs de films de 2 mm. Les mesures sont effectuées selon les indications de la norme ASTM-D-2240. - Propriétés mécaniques sur film de 2 mm (R/R, A/R et le Mod100%) : On prépare des éprouvettes de type H2 et on effectue les mesures selon les indications de la norme AFNOR-T-46002. On relève les valeurs suivantes : • résistance à la rupture (en MPa), notée R/R ; • allongement à la rupture (en %), noté A/R ; • module à 100 % d'allongement (en MPa), noté Mod100%. | | | | | |

Le tableau ci-dessus met en évidence les caractéristiques de l'invention :
1. La fabrication du mastic selon l'invention permet d'obtenir un produit ayant des caractéristiques à l'initiale équivalentes à celle du mastic témoin.
2. Après vieillissement, les propriétés du mastic selon l'invention sont améliorées par rapport au mastic témoin sur au moins 3 propriétés :
   - la vitesse de prise : le mastic témoin n'est pas réticulé sur au moins 2 mm après 24 heures alors que le mastic selon l'invention est réticulé sur plus de 2 mm et a une dureté maintenue par rapport à l'initiale (avant vieillissement accéléré, 3 semaines à 50°C),
   - la résistance à la rupture après réticulation du mastic selon l'invention est inchangée par rapport à l'initiale alors qu'elle a diminué d'au moins 20% pour le mastic témoin,
   - le module à 100 % d'allongement est passé de 0,4 MPa à 0,3 MPa après réticulation du mastic témoin alors qu'il reste inchangé à 0,4 MPa pour le mastic selon l'invention.

## Revendications

1. Utilisation d'un mélange maître **M** pour obtenir un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, **caractérisée en ce que** ledit mélange maître **M** et ledit mastic silicone alcoxy monocomposant sont préparés suivant les étapes suivantes :
a) la préparation dans un réacteur sous agitation du mélange maître **M** stable au stockage et transportable ne contenant pas de catalyseur de durcissement **G** conformément aux étapes a-1) et a-2) suivantes :
a-1) préparation d'une composition silicone comprenant :
- au moins un organopolysiloxane **A** à groupements alcoxylés terminaux et/ou pendants, obtenu insitu par fonctionnalisation :
- d'au moins un organopolysiloxane réactif **I** comprenant au moins deux groupements hydroxyles ;
- en présence d'une quantité catalytiquement efficace d'un catalyseur de fonctionnalisation **J** qui est choisi parmi le groupe constitué par :
- la lithine de formule LiOH ou LiOH, H2O,
- la soude, et
- la potasse, et
- d'au moins un réticulant silane **C2** à fonctions alcoxylées,
- au moins une charge minérale **B** de préférence à base de silice amorphe, en particulier à base de silice amorphe de pyrogénation, éventuellement au moins une autre charge telle que la silice cristalline, le carbonate de calcium ou une charge à structure lamellaire telle que le mica ;
- éventuellement au moins un réticulant silane **C1** à fonctions alcoxylées;
- éventuellement au moins un diorganopolysiloxane linéaire non réactif D de formule (I): 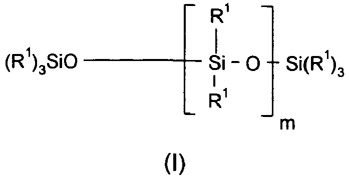 dans laquelle :
- les substituants R¹, identiques ou différents, représentent chacun un radical monovalent hydrocarboné saturé ou non en C1 à C13, substitué ou non substitué, aliphatique, cyclanique ou aromatique ; et
- m a une valeur suffisante pour conférer au polymère de formule (I) une viscosité dynamique à 25°C allant de 10 à 200.000 mPa.s ; et
- éventuellement au moins un agent auxiliaire **F** connu de l'homme de métier qui est choisi généralement, quand on en a besoin, en fonction des applications dans lesquelles les compositions selon la présente invention sont utilisées; ledit agent auxiliaire **F** étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7;** et
a-2) ladite composition silicone résultant de l'étape a-1) est maintenue sous agitation et est soumise à une opération de dévolatilisation afin d'obtenir ledit mélange maître **M;**
b) la préparation du mastic silicone alcoxy monocomposant :
on ajoute audit mélange maître **M** sous agitation, après un stockage dudit mélange maître **M** :
- une quantité efficace d'un catalyseur de durcissement **G** seul ou sous la forme d'une préparation comprenant ledit catalyseur de durcissement **G,**
- éventuellement au moins un agent auxiliaire **F** connu de l'homme de métier qui est choisi généralement, quand on en a besoin, en fonction des applications dans lesquelles les compositions selon la présente invention; ledit agent auxiliaire **F** étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7,**
- éventuellement un complément de ladite charge minérale **B,** et
- éventuellement d'au moins un pigment coloré **H** seul ou sous la forme d'une préparation comprenant ledit pigment coloré **H** ; et
- éventuellement on effectue une étape de finition au cours de laquelle le mastic silicone alcoxy monocomposant est maintenu sous agitation et est soumis à une opération de dévolatilisation effectuée de préférence sous une pression inférieure à la pression atmosphérique.

2. Utilisation d'un mélange maître **M** pour obtenir un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, selon la revendication 1 dans laquelle à l'étape a-1) les proportions sur la base de 100 parties en poids d'organopolysiloxane réactif **I** comprenant au moins deux groupements hydroxyles sont les suivantes:
- de 2 à 25 parties de réticulant(s) silane(s) **C2,**
- une quantité catalytiquement efficace de catalyseur de fonctionnalisation J,
- de 0 à 50 parties de diorganopolysiloxane(s) linéaire(s) non réactif(s) D,
- de 2 à 150 parties de charge(s) minérale(s) **B,** et
- de 0 à 50 parties d'agent(s) auxiliaire(s) **F.**

3. Utilisation d'un mélange maître **M** pour obtenir un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, selon la revendication 1 dans laquelle les silanes réticulants **C1** et/ou **C2,** identiques ou différents, sont des polyalkoxysilanes de formule **(III):**
(R⁴)ₐSi(OR⁵)₄₋ₐ **(III)**
formule dans laquelle :
- le substituant R⁴ représente un radical monovalent hydrocarboné saturé ou non en C₁ à C₁₃, substitué ou non substitué, aliphatique, cyclanique ou aromatique ;
- les symboles R⁵, identiques ou différents, représentent chacun un radical alkyle, linéaire ou ramifié, en C₁ à C₈ ; et
- a est zéro, 1 ou 2.

4. Utilisation d'un mélange maître **M** pour obtenir un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, selon la revendication 1 dans laquelle le silane réticulant **C2** est choisi parmi le groupe constitué par :
Si(OC₂H₅)₄, CH₃Si(OCH₃)₃, CH₃Si(OC₂H₅)3, (C₂H₅O)₃Si(OCH₃), (CH₂=CH)Si(OCH₃)₃, et (CH₂=CH)Si(OC₂H₅)₃

5. Utilisation d'un mélange maître **M** pour obtenir un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, selon l'une des revendication précédentes **caractérisée en ce que** lorsque ledit mélange maître **M** est transporté, ce transport étant effectué au moyen de conteneurs souples contenant un dispositif de vidange comprenant au moins un organe presseur tel qu'un piston, un jeu de rouleaux et/ou un fluide presseur.

6. Procédé de préparation d'un mastic silicone alcoxy monocomposant présentant une bonne extrudabilité, une vitesse de prise rapide (réticulation sur au moins 2 mm en 24 heures) et de bonnes propriétés de résistance mécanique après réticulation du mastic silicone alcoxy monocomposant, ceci même après un long stockage (stockage de 3 à 12 mois avant utilisation) dudit mastic silicone alcoxy monocomposant à l'abri de l'humidité de l'air, en particulier en cartouche, **caractérisée en ce que** ledit mastic silicone alcoxy monocomposant est préparé suivant les étapes suivantes :
a) la préparation dans un réacteur sous agitation d'un mélange maître **M** stable au stockage et transportable ne contenant pas de catalyseur de durcissement **G** conformément aux étapes a-1) et a-2) suivantes :
a-1) préparation d'une composition silicone comprenant :
- au moins un organopolysiloxane **A** à groupements alcoxylés terminaux et/ou pendants, obtenu insitu par fonctionnalisation :
- d'au moins un organopolysiloxane réactif **I** comprenant au moins deux groupements hydroxyles ;
- en présence d'une quantité catalytiquement efficace d'un catalyseur de fonctionnalisation **J** qui est choisi parmi le groupe constitué par :
- la lithine de formule LiOH ou LiOH, H2O,
- la soude, et
- la potasse, et
- d'au moins un réticulant silane **C2** à fonctions alcoxylées,
- au moins une charge minérale **B** de préférence à base de silice amorphe, en particulier à base de silice amorphe de pyrogénation, éventuellement au moins une autre charge telle que la silice cristalline, le carbonate de calcium ou une charge à structure lamellaire telle que le mica ;
- éventuellement au moins un réticulant silane **C1** à fonctions alcoxylées;
- éventuellement au moins un diorganopolysiloxane linéaire non réactif **D** de formule (I): 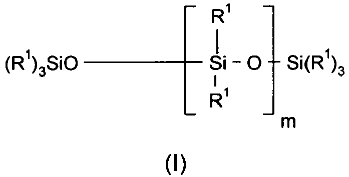 dans laquelle :
- les substituants R¹, identiques ou différents, représentent chacun un radical monovalent hydrocarboné saturé ou non en C1 à C13, substitué ou non substitué, aliphatique, cyclanique ou aromatique ; et
- m a une valeur suffisante pour conférer au polymère de formule (I) une viscosité dynamique à 25°C allant de 10 à 200.000 mPa.s ; et
- éventuellement au moins un agent auxiliaire F connu de l'homme de métier qui est choisi généralement, quand on en a besoin, en fonction des applications dans lesquelles les compositions selon la présente invention sont utilisées; ledit agent auxiliaire **F** étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7;** et
a-2) ladite composition silicone résultant de l'étape a-1) est maintenue sous agitation et est soumise à une opération de dévolatilisation afin d'obtenir ledit mélange maître **M;**
b) l'addition au dit mélange maître **M** et sous agitation, après un stockage dudit mélange maître **M** :
- d'une quantité efficace d'un catalyseur de durcissement **G** seul ou sous la forme d'une préparation comprenant ledit catalyseur de durcissement **G,**
- éventuellement d'au moins un agent auxiliaire **F** connu de l'homme de métier qui est choisi généralement, quand on en a besoin, en fonction des applications dans lesquelles les compositions selon la présente invention; ledit agent auxiliaire F étant de préférence choisi parmi le groupe constitué par les agents d'adhérence **F1,** les antifongiques **F2** ; les bactéricides **F3,** les diluants inertes organiques **F4,** les plastifiants **F5,** les agents thixotropants **F6** et les agents de stabilisation **F7,**
- éventuellement d'un complément de ladite charge minérale **B,** et
- éventuellement d'au moins un pigment coloré **H** seul ou sous la forme d'une préparation comprenant ledit pigment coloré **H** ; et
c) éventuellement une étape de finition au cours de laquelle le mélange obtenu à l'issu de l'étape précédente est maintenu sous agitation et est soumis à une opération de dévolatilisation effectuée de préférence sous une pression inférieure à la pression atmosphérique.

## Patentansprüche

1. Verwendung einer Grundmischung M, um einen Silikonalkoxy-Einkomponentenkitt mit einer guten Extrudierbarkeit, einer raschen Abbindegeschwindigkeit (Vernetzung auf mindestens 2 mm in 24 Stunden) und guten mechanischen Festigkeitseigenschaften nach der Vernetzung des Silikonalkoxy-Einkomponentenkitts zu erhalten, dies sogar nach einer langen Lagerung (3 bis 12 Monate Lagerung vor der Verwendung) des Silikonalkoxy-Einkomponentenkitts unter Ausschluss von Luftfeuchtigkeit, insbesondere in einer Kartusche,
**dadurch gekennzeichnet, dass** die Grundmischung M und der Silikonalkoxy-Einkomponentenkitt gemäß den folgenden Schritten hergestellt werden:
a) Herstellung, in einem Reaktor unter Rühren, der lagerstabilen und transportablen Grundmischung M, die keinen Härtungskatalysator G enthält, gemäß den folgenden Schritten a=1) und a-2):
a-1) Herstellung einer Silikon-Zusammensetzung, umfassend:
- mindestens ein Organopolysiloxan A mit alkoxylierten Endgruppen und/oder Seitengruppen, erhalten insitu durch Funktionalisierung:
- mindestens eines reaktiven Organopolysiloxans I, umfassend mindestens zwei Hydroxylgruppen;
- in Gegenwart einer katalytisch wirksamen Menge eines Funktionalisierungskatalysators J, der ausgewählt wird aus der Gruppe bestehend aus:
- Lithin mit der Formel LiOH oder LiOH, H2O,
- Soda, und
- Kaliumchlorid, und
- mindestens eines vernetzenden C2-Silans mit alkoxylierten Funktionen,
- mindestens einen mineralischen Füllstoff B vorzugsweise auf der Basis von amorphem Siliciumdioxid, insbesondere auf der Basis von pyrogen hergestelltem amorphen Siliciumdioxid, gegebenenfalls mindestens einen anderen Füllstoff, wie kristallines Silciumdioxid, Calciumcarbonat oder einen Füllstoff mit einer lamellaren Struktur, wie Mica;
- gegebenenfalls mindestens ein vernetzendes Silan C1 mit alkoxylierten Funktionen;
- gegebenenfalls mindestens ein lineares nichtreaktives Diorganopolysiloxan D mit der Formel (I) : 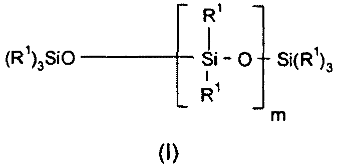 wobei:
- die Substituenten R¹, identisch oder verschieden, jeweils einen gesättigten oder ungesättigten einwertigen, substituierten oder unsubstituierten, aliphatischen, zyklischen oder aromatischen C1-C13-Kohlenwasserstoffrest darstellen; und
- m einen ausreichenden Wert hat, um dem Polymer mit der Formel (I) eine dynamische Viskosität bei 25°C von 10 bis 200.000 mPa.s zu verleihen; und
- gegebenenfalls mindestens ein Fachleuten bekanntes Hilfsmittel F, das allgemein, wenn Bedarf besteht, als Funktion der Anwendungen ausgewählt wird, bei denen die Zusammensetzungen gemäß der vorliegenden Erfindung verwendet werden; wobei das Hilfsmittel F vorzugsweise ausgewählt wird aus der Gruppe bestehend aus Haftmitteln F1, Antifungiziden F2, Bakteriziden F3, organischen inerten Verdünnungsmitteln F4, Weichmachern F5, thixotropen Mitteln F6 und Stabilisatoren F7; und
a-2) die Silikon-Zusammensetzung, die aus Schritt a-1) erhalten wird, wird unter Rühren gehalten und wird einem Vorgang des Entfernens flüchtiger Bestandteile unterworfen, um die Grundmischung M zu erhalten;
b) Herstellung des Silikonalkoxy-Einkomponentenkitts: der Grundmischung M werden unter Rühren, nach einer Lagerung der Grundmischung M, zugesetzt:
- eine wirksame Menge eines Härtungskatalysators G allein oder in der Form einer Zubereitung, umfassend den Härtungskatalysator G;
- gegebenenfalls mindestens ein Fachleuten bekanntes Hilfsmittel F, das allgemein, wenn Bedarf besteht, als Funktion der Anwendungen ausgewählt wird, bei denen die Zusammensetzungen gemäß der vorliegenden Erfindung; wobei das Hilfsmittel F vorzugsweise ausgewählt wird aus der Gruppe bestehend aus Haftmitteln F1, Antifungiziden F2, Bakteriziden F3, organischen inerten Verdünnungsmitteln F4, Weichmachern F5, thixotropen Mitteln F6 und Stabilisatoren F7;
- gegebenenfalls mindestens eine Ergänzung des mineralischen Füllstoffs B; und
- gegebenenfalls mindestens ein Farbpigment H allein oder in der Form einer Zubereitung, die das Farbpigment H enthält; und
- gegebenenfalls wird ein abschließender Schritt durchgeführt, in dem der Silikonalkoxy-Einkomponentenkitt unter Rühren gehalten wird und einem Vorgang des Entfernens flüchtiger Bestandteile unterworfen wird, vorzugsweise bei einem Druck unter Atmosphärendruck.

2. Verwendung einer Grundmischung M, um einen Silikonalkoxy-Einkomponentenkitt mit einer guten Extrudierbarkeit, einer raschen Abbindegeschwindigkeit (Vernetzung auf mindestens 2 mm in 24 Stunden) und guten mechanischen Festigkeitseigenschaften nach der Vernetzung des Silikonalkoxy-Einkomponentenkitts zu erhalten, dies sogar nach einer langen Lagerung (3 bis 12 Monate Lagerung vor der Verwendung) des Silikonalkoxy-Einkomponentenkitts unter Ausschluss von Luftfeuchtigkeit, insbesondere in einer Kartusche, nach Anspruch 1,
wobei in Schritt a-1) die Anteile auf der Basis von 100 Gewichtsteilen des reaktiven Organopolysiloxans I mit mindestens zwei Hydroxylgruppen wie folgt sind:
- von 2 bis 25 Teile vernetzende(s) Silan(e) C2,
- eine katalytisch wirksame Menge des Funktionalisierungskatalysators J,
- von 0 bis 50 Teile nicht-reaktive(s) lineare(s) Diorganopolysiloxan(e) D,
- von 2 bis 150 Teile mineralische(r) Füllstoff(e) B; und
- von 0 bis 50 Teile Hilfsmittel F.

3. Verwendung einer Grundmischung M, um einen Silikonalkoxy-Einkomponentenkitt mit einer guten Extrudierbarkeit, einer raschen Abbindegeschwindigkeit (Vernetzung auf mindestens 2 mm in 24 Stunden) und guten mechanischen Festigkeitseigenschaften nach der Vernetzung des Silikonalkoxy-Einkomponentenkitts zu erhalten, dies sogar nach einer langen Lagerung (3 bis 12 Monate Lagerung vor der Verwendung) des Silikonalkoxy-Einkomponentenkitts unter Ausschluss von Luftfeuchtigkeit, insbesondere in einer Kartusche, nach Anspruch 1,
wobei die vernetzenden Silane C1 und/oder C2, identisch oder verschieden, Polyalkoxysilane mit der Formel (III) sind:
(R⁴)ₐSi(OR⁵)₄₋ₐ (III)
wobei in der Formel:
- der Substituent R⁴ einen gesättigten oder ungesättigten einwertigen, substituierten oder unsubstituierten, aliphatischen, zyklischen oder aromatischen C1-C13-Kohlenwasserstoffrest darstellen;
- die Symbole R⁵, identisch oder verschieden, jeweils einen linearen oder verzweigten C1-C8-Alkylrest darstellen; und
A Null, 1 oder 2 ist.

4. Verwendung einer Grundmischung M, um einen Silikonalkoxy-Einkomponentenkitt mit einer guten Extrudierbarkeit, einer raschen Abbindegeschwindigkeit (Vernetzung auf mindestens 2 mm in 24 Stunden) und guten mechanischen Festigkeitseigenschaften nach der Vernetzung des Silikonalkoxy-Einkomponentenkitts zu erhalten, dies sogar nach einer langen Lagerung (3 bis 12 Monate Lagerung vor der Verwendung) des Silikonalkoxy-Einkomponentenkitts unter Ausschluss von Luftfeuchtigkeit, insbesondere in einer Kartusche, nach Anspruch 1,
wobei das vernetzende Silan C2 ausgewählt wird aus der Gruppe bestehend aus:
Si(OC₂H₅)₄, CH₃Si(OCH₃)₃, CH₃Si(OC₂H₅)₃, (C₂H₅O)₃Si(OCH₃), (CH₂=CH)Si(OCH₃)₃, und (CH₂=CH)Si(OC₂H₅)₃.

5. Verwendung einer Grundmischung M, um einen Silikonalkoxy-Einkomponentenkitt mit einer guten Extrudierbarkeit, einer raschen Abbindegeschwindigkeit (Vernetzung auf mindestens 2 mm in 24 Stunden) und guten mechanischen Festigkeitseigenschaften nach der Vernetzung des Silikonalkoxy-Einkomponentenkitts zu erhalten, dies sogar nach einer langen Lagerung (3 bis 12 Monate Lagerung vor der Verwendung) des Silikonalkoxy-Einkomponentenkitts unter Ausschluss von Luftfeuchtigkeit, insbesondere in einer Kartusche, nach einem der vorhergehenden Ansprüche,
**dadurch gekennzeichnet, dass**, wenn die Grundmischung M transportiert wird, dieser Transport mittels nachgiebiger Behälter durchgeführt wird, die eine Entleerungsvorrichtung enthalten, umfassend mindestens ein Presselement, wie einen Kolben, einen Rollensatz und/oder ein Pressfluid.

6. Verfahren zur Herstellung eines Silikonalkoxy-Einkomponentenkitts mit einer guten Extrudierbarkeit, einer raschen Abbindegeschwindigkeit (Vernetzung auf mindestens 2 mm in 24 Stunden) und guten mechanischen Festigkeitseigenschaften nach der Vernetzung des Silikonalkoxy-Einkomponentenkitts, dies sogar nach einer langen Lagerung (3 bis 12 Monate Lagerung vor der Verwendung) des Silikonalkoxy-Einkomponentenkitts unter Ausschluss von Luftfeuchtigkeit, insbesondere in einer Kartusche, **dadurch gekennzeichnet, dass** der Silikonalkoxy-Einkomponentenkitt gemäß den folgenden Schritten hergestellt wird:
a) Herstellung, in einem Reaktor unter Rühren, einer lagerstabilen und transportablen Grundmischung M, die keinen Härtungskatalysator G enthält, gemäß den folgenden Schritten a-1) und a-2):
a-1) Herstellung einer Silikon-Zusammensetzung, umfassend:
- mindestens ein Organopolysiloxan A mit alkoxylierten Endgruppen und/oder Seitengruppen, erhalten insitu durch Funktionalisierung:
- mindestens eines reaktiven Organopolysiloxans I, umfassend mindestens zwei Hydroxylgruppen;
- in Gegenwart einer katalytisch wirksamen Menge eines Funktionalisierungskatalysators J, der ausgewählt wird aus der Gruppe bestehend aus:
- Lithin mit der Formel LiOH oder LiOH, H2O,
- Soda, und
- Kaliumchlorid, und
- mindestens eines vernetzenden C2-Silans mit alkoxylierten Funktionen,
- mindestens einen mineralischen Füllstoff B vorzugsweise auf der Basis von amorphem Siliciumdioxid, insbesondere auf der Basis von pyrogen hergestelltem amorphen Siliciumdioxid, gegebenenfalls mindestens einen anderen Füllstoff, wie kristallines Silciumdioxid, Calciumcarbonat oder einen Füllstoff mit einer lamellaren Struktur, wie Mica;
- gegebenenfalls mindestens ein vernetzendes Silan C1 mit alkoxylierten Funktionen;
- gegebenenfalls mindestens ein lineares nichtreaktives Diorganopolysiloxan D mit der Formel (I) : 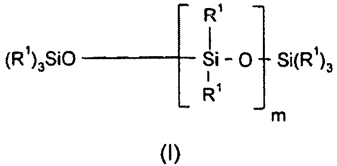 wobei:
- die Substituenten R¹, identisch oder verschieden, jeweils einen gesättigten oder ungesättigten einwertigen, substituierten oder unsubstituierten, aliphatischen, zyklischen oder aromatischen C1-C13-Kohlenwasserstoffrest darstellen; und
- m einen ausreichenden Wert hat, um dem Polymer mit der Formel (I) eine dynamische Viskosität bei 25°C von 10 bis 200.000 mPa.s zu verleihen; und
- gegebenenfalls mindestens ein Fachleuten bekanntes Hilfsmittel F, das allgemein, wenn Bedarf besteht, als Funktion der Anwendungen ausgewählt wird, bei denen die Zusammensetzungen gemäß der vorliegenden Erfindung verwendet werden; wobei das Hilfsmittel F vorzugsweise ausgewählt wird aus der Gruppe bestehend aus Haftmitteln F1, Antifungiziden F2, Bakteriziden F3, organischen inerten Verdünnungsmitteln F4, Weichmachern F5, thixotropen Mitteln F6 und Stabilisatoren F7; und
a-2) die Silikon-Zusammensetzung, die aus Schritt a-1) erhalten wird, wird unter Rühren gehalten und wird einem Vorgang des Entfernens flüchtiger Bestandteile unterworfen, um die Grundmischung M zu erhalten;
b) Zusatz, zur Grundmischung M unter Rühren, nach einer Lagerung der Grundmischung M:
- einer wirksamen Menge eines Härtungskatalysators G allein oder in der Form einer Zubereitung, umfassend den Härtungskatalysator G;
- gegebenenfalls mindestens eines Fachleuten bekannten Hilfsmittels F, das allgemein, wenn Bedarf besteht, als Funktion der Anwendungen ausgewählt wird, bei denen die Zusammensetzungen gemäß der vorliegenden Erfindung; wobei das Hilfsmittel F vorzugsweise ausgewählt wird aus der Gruppe bestehend aus Haftmitteln F1, Antifungiziden F2, Bakteriziden F3, organischen inerten Verdünnungsmitteln F4, Weichmachern F5, thixotropen Mitteln F6 und Stabilisatoren F7;
- gegebenenfalls mindestens einer Ergänzung des mineralischen Füllstoffs B; und
- gegebenenfalls mindestens eines Farbpigments H allein oder in der Form einer Zubereitung, die das Farbpigment H enthält; und
c) gegebenenfalls ein abschließender Schritt, in dem die Mischung, die aus dem vorhergehenden Schritt erhalten wird, unter Rühren gehalten wird und einem Vorgang des Entfernens flüchtiger Bestandteile unterworfen wird, der vorzugsweise bei einem Druck unter Atmosphärendruck durchgeführt wird.

## Claims

1. Use of a masterbatch **M** to obtain a single-component alkoxy silicone sealant having good extrudability, a rapid cure rate (crosslinking over at least 2 mm in 24 hours) and good mechanical strength properties after crosslinking of the single-component alkoxy silicone sealant, this being so even after a long storage (storage of 3 to 12 months before use) of said single-component alkoxy silicone sealant away from air moisture, in particular in cartridges, **characterized in that** said masterbatch **M** and said single-component alkoxy silicone sealant are prepared according to the following steps:
a) the preparation, in a stirred reactor, of the masterbatch **M** that is stable during storage and transportable and that does not contain a curing catalyst **G** according to the steps a-1) and a-2) below:
a-1) preparation of a silicone composition comprising:
- at least one organopolysiloxane **A** having terminal and/or pendent alkoxylated groups obtained in situ by functionalization:
- of at least one reactive organopolysiloxane I comprising at least two hydroxyl groups;
- in the presence of a catalytically effective amount of a functionalization catalyst J
- of at least one silane crosslinker C2 having alkoxylated functional groups, which is chosen from the group composed of:
- lithium hydroxide of formula LiOH or LiOH·H₂O,
- sodium hydroxide, and
- potassium hydroxide, and
- at least one mineral filler **B** preferably based on amorphous silica, in particular based on amorphous pyrogenic silica, optionally at least one other filler such as crystalline silica, calcium carbonate or a filler having a lamellar structure such as mica;
- optionally at least one silane crosslinker **C1** having alkoxylated functional groups;
- optionally at least one nonreactive linear diorganopolysiloxane **D** of formula (I): 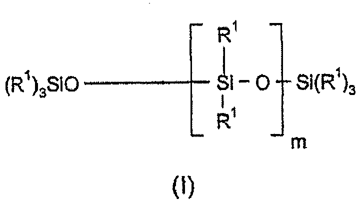 in which:
- the R¹ substituents, which are identical or different, each represent an aliphatic, cyclanic or aromatic, substituted or unsubstituted, saturated or unsaturated, C₁ to C₁₃ monovalent hydrocarbon-based radical; and
- m has a sufficient value to give the polymer of formula (I) a dynamic viscosity at 25°C ranging from 10 to 200 000 mPa.s; and
- optionally at least one auxiliary agent **F** known to a person skilled in the art which is generally chosen, when it is needed, depending on the applications in which the compositions according to the present invention are used; said auxiliary agent **F** preferably being chosen from the group composed of adhesion promoters **F1,** antifungal agents **F2,** bactericides **F3,** inert organic diluents **F4,** plasticizers **F5,** thixotroping agents **F6** and stabilizers **F7;** and
a-2) said silicone composition resulting from step a-1) continues to be stirred and is subjected to a devolatilization operation in order to obtain said masterbatch **M;**
b) the preparation of the single-component alkoxy silicone sealant:
added to said stirred masterbatch **M,** after storage of said masterbatch **M,** are:
- an effective amount of a curing catalyst **G** alone or in the form of a preparation comprising said curing catalyst **G;**
- optionally at least one auxiliary agent **F** known to a person skilled in the art which is generally chosen, when it is needed, depending on the applications in which the compositions according to the present invention; said auxiliary agent **F** preferably being chosen from the group composed of adhesion promoters **F1,** antifungal agents **F2,** bactericides **F3,** inert organic diluents **F4,** plasticizers **F5,** thixotroping agents **F6** and stabilizers **F7;**
- optionally a supplement of said mineral filler **B;** and
- optionally at least one colored pigment **H** alone or in the form of a preparation comprising said colored pigment **H;** and
- optionally a finishing step is carried out during which the single-component alkoxy silicone sealant continues to be stirred and is subjected to a devolatilization operation preferably carried out under a pressure below atmospheric pressure.

2. Use of a masterbatch **M** to obtain a single-component alkoxy silicone sealant having good extrudability, a rapid cure rate (crosslinking over at least 2 mm in 24 hours) and good mechanical strength properties after crosslinking of the single-component alkoxy silicone sealant, this being so even after a long storage (storage of 3 to 12 months before use) of said single-component alkoxy silicone sealant away from air moisture, in particular in cartridges, as claimed in Claim 1, in which in step a-1) the proportions based on 100 parts by weight of reactive organopolysiloxane **I** comprising at least two hydroxyl groups are the following:
- from 2 to 25 parts of silane crosslinker(s) **C2;**
- a catalytically effective amount of functionalization catalyst **J;**
- from 0 to 50 parts of nonreactive, linear diorganopolysiloxane(s) **D;**
- from 2 to 150 parts of mineral filler(s) **B;** and
- from 0 to 50 parts of auxiliary agent(s) **F.**

3. Use of a masterbatch **M** to obtain a single-component alkoxy silicone sealant having good extrudability, a rapid cure rate (crosslinking over at least 2 mm in 24 hours) and good mechanical strength properties after crosslinking of the single-component alkoxy silicone sealant, this being so even after a long storage (storage of 3 to 12 months before use) of said single-component alkoxy silicone sealant away from air moisture, in particular in cartridges, as claimed in Claim 1, in which the silane crosslinkers **C1** and/or **C2,** which are identical or different, are polyalkoxysilanes of formula **(III):**
(R⁴)ₐSi(OR⁵)₄₋ₐ **(III)**
in which formula:
- the R⁴ substituent represents an aliphatic, cyclanic or aromatic, substituted or unsubstituted, saturated or unsaturated, C₁ to C₁₃ monovalent hydrocarbon-based radical;
- the R⁵ symbols, which are identical or different, each represent a linear or branched C₁ to C₈ alkyl radical; and
- a is 0, 1 or 2.

4. Use of a masterbatch **M** to obtain a single-component alkoxy silicone sealant having good extrudability, a rapid cure rate (crosslinking over at least 2 mm in 24 hours) and good mechanical strength properties after crosslinking of the single-component alkoxy silicone sealant, this being so even after a long storage (storage of 3 to 12 months before use) of said single-component alkoxy silicone sealant away from air moisture, in particular in cartridges, as claimed in Claim 1, in which the silane crosslinker **C2** is chosen from the group composed of:
Si(OC₂H₅)₄, CH₃Si(OCH₃)₃, CH₃Si(OC₂H₅)₃, (C₂H₅O)₃Si(OCH₃), (CH₂=CH)Si(OCH₃)₃, and (CH₂=CH)Si(OC₂H₅)₃.

5. Use of a masterbatch **M** to obtain a single-component alkoxy silicone sealant having good extrudability, a rapid cure rate (crosslinking over at least 2 mm in 24 hours) and good mechanical strength properties after crosslinking of the single-component alkoxy silicone sealant, this being so even after a long storage (storage of 3 to 12 months before use) of said single-component alkoxy silicone sealant away from air moisture, in particular in cartridges, as claimed in one of the preceding claims, **characterized in that** when said masterbatch **M** is transported, this transport is carried out by means of flexible containers that contain a drainage device comprising at least one pressure member such as a piston, a set of rollers and/or a pressure fluid.

6. Method of preparing a single-component alkoxy silicone sealant having good extrudability, a rapid cure rate (crosslinking over at least 2 mm in 24 hours) and good mechanical strength properties after crosslinking of the single-component alkoxy silicone sealant, this being so even after a long storage (storage of 3 to 12 months before use) of said single-component alkoxy silicone sealant away from air moisture, in particular in cartridges, **characterized in that** said single-component alkoxy silicone sealant is prepared according to the following steps:
a) the preparation, in a stirred reactor, of a masterbatch **M** that is stable during storage and transportable and that does not contain a curing catalyst **G** according to the steps a-1) and a-2) below:
a-1) preparation of a silicone composition comprising:
- at least one organopolysiloxane **A** having terminal and/or pendent alkoxylated groups obtained in situ by functionalization:
- of at least one reactive organopolysiloxane I comprising at least two hydroxyl groups;
- in the presence of a catalytically effective amount of a functionalization catalyst J
- of at least one silane crosslinker C2 having alkoxylated functional groups, which is chosen from the group composed of:
- lithium hydroxide of formula LiOH or LiOH·H₂O,
- sodium hydroxide, and
- potassium hydroxide, and
- at least one mineral filler **B** preferably based on amorphous silica, in particular based on amorphous pyrogenic silica, optionally at least one other filler such as crystalline silica, calcium carbonate or a filler having a lamellar structure such as mica;
- optionally at least one silane crosslinker **C1** having alkoxylated functional groups;
- optionally at least one nonreactive linear diorganopolysiloxane **D** of formula (I): 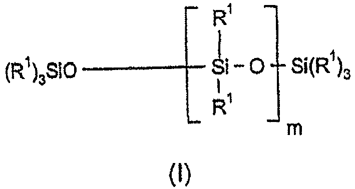 in which:
- the R¹ substituents, which are identical or different, each represent an aliphatic, cyclanic or aromatic, substituted or unsubstituted, saturated or unsaturated, C₁ to C₁₃ monovalent hydrocarbon-based radical; and
- m has a sufficient value to give the polymer of formula (I) a dynamic viscosity at 25°C ranging from 10 to 200 000 mPa.s; and
- optionally at least one auxiliary agent **F** known to a person skilled in the art which is generally chosen, when it is needed, depending on the applications in which the compositions according to the present invention are used; said auxiliary agent **F** preferably being chosen from the group composed of adhesion promoters **F1,** antifungal agents **F2,** bactericides **F3,** inert organic diluents **F4,** plasticizers **F5,** thixotroping agents **F6** and stabilizers **F7;** and
a-2) said silicone composition resulting from step a-1) continues to be stirred and is subjected to a devolatilization operation in order to obtain said masterbatch **M;**
b) the addition to said masterbatch **M,** with stirring, after storage of said masterbatch **M,** of:
- an effective amount of a curing catalyst **G** alone or in the form of a preparation comprising said curing catalyst **G;**
- optionally at least one auxiliary agent **F** known to a person skilled in the art which is generally chosen, when it is needed, depending on the applications in which the compositions according to the present invention; said auxiliary agent **F** preferably being chosen from the group composed of adhesion promoters **F1,** antifungal agents **F2,** bactericides **F3,** inert organic diluents **F4,** plasticizers **F5,** thixotroping agents **F6** and stabilizers **F7;**
- optionally a supplement of said mineral filler **B;** and
- optionally at least one colored pigment **H** alone or in the form of a preparation comprising said colored pigment **H;** and
c) optionally a finishing step during which the mixture obtained at the end of the preceding step continues to be stirred and is subjected to a devolatilization operation preferably carried out under a pressure below atmospheric pressure.
